# EUROPEAN PATENT APPLICATION

(11) **EP 3 432 241 A1**
(43) Date of publication of application: **23.01.2019**
(21) Application number: 17766624.5
(22) Date of filing: 13.03.2017
(51) Int. Cl.: G06Q 30/02

(54) **ADVERTISEMENT PROVIDING SYSTEM AND PROGRAM**

(30) Priority: 15.03.2016 JP 2016050399
(71) Applicant: Recruit Co., Ltd., Chuo-ku Tokyo 1040061 (JP)
(72) Inventor: WATASE, Takehiro, Tokyo 100-6640 (JP); SHINTANI, Akinori, Tokyo 100-6640 (JP)
(74) Representative: EIP
(86) International application number: PCT/JP2017/010005
(87) International publication number: WO 2017/159624

(57) **Abstract**

There is provided an attractive advertisement to a turn-waiting user. The main attribute deciding portion 410 decides a main attribute of users waiting for their turns in a store to which advertisements are to be provided, in response to an advertisement request from the management server 300. The advertisement selecting portion 420 selects one or more advertisements suitable for the users from among a plurality of advertisements registered with an advertisement database DB 430 in consideration of the main attribute. The advertisement distributing portion 450 transmits the selected one or more advertisements to the turn management terminal 100 of a corresponding store as advertisement information.

## Description

### Cross Reference of Related Application

The present application is based on Japanese Application No. 2016-050399 filed on March 15, 2016, the description of which is hereby incorporated by reference thereto.

### Technical Field

The present invention relates to an advertisement providing system and a program.

### Background Art

In a bank or the like, many customers (users) visit every day, and long lines are often formed in front of a consultation counter. In such a case, users waiting for their turns just have to wait, and there is a problem that valuable time is spent uselessly (see, for example, Patent Literature 1).

### Citation List

### Patent Literature

Patent Literature 1: Japanese Patent Laid-Open No. 2004-38823

### Summary of Invention

In order to solve such a problem, it has been proposed to effectively utilize waiting time, for example, by installing a large size display in a waiting space where each user waits for his turn and displaying advertisements introducing tourist facilities in a surrounding area (such as a castle and historical sites).

However, a problem has been pointed out that, if the advertisements displayed on the large size display are such that the users waiting for their turns are not interested, the users do not look at the advertisements, and the waiting time cannot be effectively utilized after all.

The present invention has been made in view of the situation described above, and one of its objects is to provide an advertisement providing system and the like capable of providing attractive advertisements to users waiting for their turns.

An advertisement providing system according to an embodiment of the present invention is an advertisement providing system comprising a display device displaying a waiting state of users waiting for their turns in a facility and providing advertisements to the users, the advertisement providing system comprising: an advertisement database storing a plurality of pieces of advertisement information; an input portion accepting an input of pieces of attribute information about the users waiting for their turns; a decision portion deciding a main attribute of all of the users waiting for their turns by aggregating and analyzing the input pieces of attribute information; a selection portion selecting advertisement information to be provided, based on the decided main attribute; a distribution portion distributing the selected advertisement information to the facility; and a display controlling portion displaying the distributed advertisement information together with the waiting state of the users waiting for their turns on the display device.

Here, in the above configuration, an aspect is preferable in which a detection portion detecting whether there is a change in the main attribute or not is further provided, and, if the change in the main attribute is detected by the detection portion, the selection portion selects the advertisement information to be provided, based on the changed main attribute.

Further, in the above configuration, the selecting portion may select advertisements of genres that the users of the decided main attribute show great interest in, as the advertisement information to be provided, and the main attribute is at least either a sex or an age group to which the largest number of users belong.

### Advantageous Effect of Invention

According to the present invention, it becomes possible to provide an attractive advertisement to a turn-waiting user.

### Brief Description of Drawings

[Figure 1] Figure 1 is a diagram showing a schematic configuration of an advertisement providing system 1000 according to a first embodiment.
[Figure 2] Figure 2 is a diagram illustrating a display screen of a large size display 250.
[Figure 3] Figure 3 is a block diagram showing a main configuration of a turn management terminal 100.
[Figure 4] Figure 4 is a block diagram showing a functional configuration of an advertisement providing server 400.
[Figure 5] Figure 5 is a flowchart showing a flow of a process for accepting new registration of turn-waiting in the advertisement providing system 1000.
[Figure 6] Figure 6 is a flowchart showing an advertisement providing process.
[Figure 7] Figure 7 is a sequence diagram in a case where turn management is performed using three turn management terminals 100A to 100C.

### Description of Embodiments

Embodiments of the present invention will be described below in detail with reference to drawings. Same components are given the same reference numeral, and overlapped description will be omitted.

### A. First embodiment

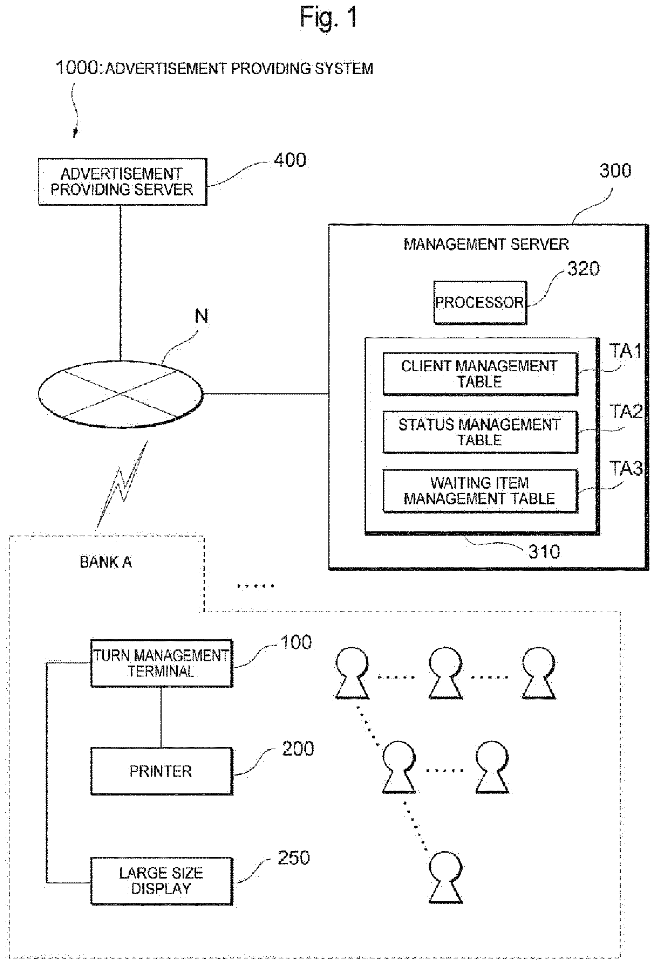

Figure 1 is a diagram showing a schematic configuration of an advertisement providing system 1000 according to a first embodiment. The advertisement providing system 1000 is provided with turn management terminals 100 which are provided in stores such as banks to manage turn-waiting of users, printers 200 connected to the turn management terminals 100, a management server 300 which comprehensively manage the turn management terminals 100 through a communication network N, and an advertisement providing server 400 which provides advertisements to turn-waiting users.

In Figure 1, Bank A is illustrated as an example of stores in which the turn management terminal 100 is provided. However, it is not intended to limit stores thereto, and the turn management terminal 100 is applicable to all facilities where turn-waiting occurs, such as restaurants and shops, complex amusement systems, shopping malls, department stores, hospitals and public facilities. Hereinafter, in order to facilitate understanding of description, facilities in which the turn management terminals 100 are provided will be generically referred to as "stores".

The turn management terminal 100 is a terminal apparatus placed in the vicinity of an entrance of a store or the like to manage turn-waiting at the time of receiving provision of various services. As the turn management terminal 100, all terminal apparatuses capable of giving and receiving data to and from the management server 300 via the communication network N, such as a personal computer (PC), a notebook PC, a smartphone, a mobile telephone and a mobile information terminal (PDA), can be used in addition to a tablet terminal.

The printer 200 is wiredly or wirelessly connected to the turn management terminal 100 and issues turn tickets showing turn-waiting numbers or coupons giving various benefits and the like.

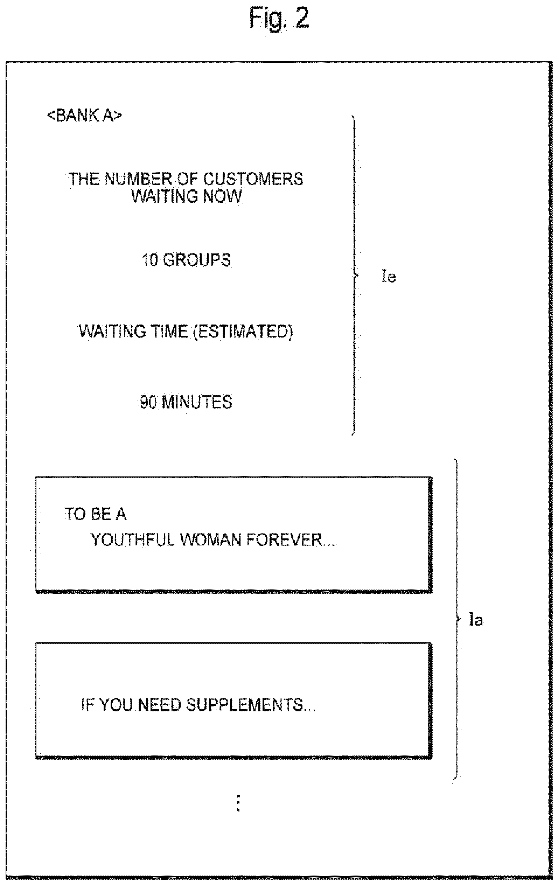

A large size display (a display device) 250 is wiredly or wirelessly connected to the turn management terminal 100 and displays a turn waiting state (the number of waiting groups, waiting time and the like) at the current point of time as well as advertisements considering attributes of all of users waiting for their turns. Figure 2 is a diagram illustrating a display screen of the large size display 250. As shown in Figure 2, waiting state information Ie indicating a turn waiting state of users at the current point of time and advertisement information Ia considering attributes of all the users are displayed on the large size display 250. Here, the "attributes of all the users" refer to attribute conditions for providing advertisements, which are decided after aggregating attributes (for example, sex, age group and the like) of the users (or user groups) waiting for their turns. For example, if 70% of the users waiting for their turns are "women", and 80% are in their "thirties", "women in their thirties" is selected (decided) as a "main attribute", and advertisements of genres in which "women in their thirties" are most likely to be interested in (for example, goods related to beauty, health and the like) are displayed on the large size display 250 (see Figure 2). The advertisements displayed on the large size display 250 are provided from the advertisement providing server 400, which will be described in detail later.

The management server 300 is configured, for example, with a computer with a high arithmetic processing capability and realizes a server function by a predetermined server program operating on the computer. Here, the management server 300 is not necessarily required to be constituted by one computer. The management server 300 may be configured with a plurality of computers distributed on the communication network N. The management server 300 is provided with a management database 310 for managing the turn management terminal 100 for each store and a processor 320. The management database 310 is provided with a client management table TA1, a status management table TA2 and a waiting item management table TA3.

A specific ID and password (account) are registered with the client management table TA1 in association with each store. Here, "ID: A1..." and "Password: AA2..." (that is, store identification information) are set for the turn management terminal 100 used in "Bank A". The ID and password for each store are set, for example, by a manager who performs management of turn-waiting in the store (for example, the store manager or the like) at the time of introducing the system. Although a case is assumed where one turn management terminal 100 is used in one store in the present embodiment, a plurality of turn management terminals 100 may be used in one store (this is to be described later). In the case of using a plurality of turn management terminals 100 in one store, the same ID and password may be used, but a plurality of different IDs and passwords may be used, for example, according to a predetermined condition.

A turn-waiting list in each store is registered with the status management table TA2. This turn-waiting list includes a list of turn-waiting persons and information indicating a turn-waiting state (status) of each person (status information). For example, as for Bank A, there are "five groups" waiting for their turns; a first group includes "one man in his thirties and one woman in her twenties" and is accepted at "11:11 am"; a second group includes "one woman in her twenties" and is accepted at "11:15 am"; and so on. Registration content of the status management table TA2 is changed based on information newly registered with the turn-waiting list transmitted from the turn management terminal 100 or status update information (details will be described later). What kind of information is to be the status information can be appropriately set or changed by a manager or the like of each store.

Waiting items which can be selected at the time of reservation and reference waiting time for each waiting item, which are set for each store, are registered with a waiting item management table TA3. For example, waiting items set for the turn management terminal 100 used in "Bank A" are types of consultation content, and, here, "various kinds of loans", "account opening", "financial instruments intermediary service" and the like are set. The reference waiting time is average waiting time until one turn-waiting group is guided, and the reference waiting time can be changed for the first group and for the second and subsequent groups. For example, here, waiting time for the first group (15 minutes) and waiting time for the second and subsequent groups (10 minutes) are set for "various kinds of loans", waiting time for the first group (5 minutes) and waiting time for the second and subsequent groups (3 minutes) are set for "account opening", and waiting time for the first group (10 minutes) and waiting time for the second and subsequent groups (15 minutes) are set for "financial instruments intermediary service". The waiting items and reference waiting times for each store are set, for example, by a manager who performs management of turn-waiting in each facility (for example, a store manager) at the time of introducing the system. Further, the waiting items and the reference waiting times can be changed at any time as necessary.

The processor 320 is configured with an arithmetic/logical operation unit (such as a CPU) which performs arithmetic operation, logical operation, bit operation and the like and various registers, and centrally controls each portion of the management server 300 by executing various programs stored in storage means such as a ROM. Further, the processor 320 executes a computer program for managing turn-waiting in cooperation with the turn management terminals 100.

The advertisement providing server 400 is configured with a server computer or the like, and, in response to a request to provide advertisements from the management server 300, distributes selected advertisements. The advertisements distributed from the advertisement providing server 400 is sent to the turn management terminal 100 of a store (here, Bank A) via the communication network N as advertisement information. The advertisement information transmitted to the turn management terminal 100 is displayed on the large size display 250 (details will be described later).

The communication network N includes a communication network through which information can be mutually transmitted and received among the advertisement providing server 400, the management server 300 and the turn management terminals 100. The communication network N may be, for example, any of the Internet, LAN, dedicated line, telephone line, in-house network, mobile communication network, Bluetooth(R), WiFi (Wireless Fidelity), other communication lines and a combination thereof, and whether wired or wireless does not matter.

### <Turn management terminal 100>

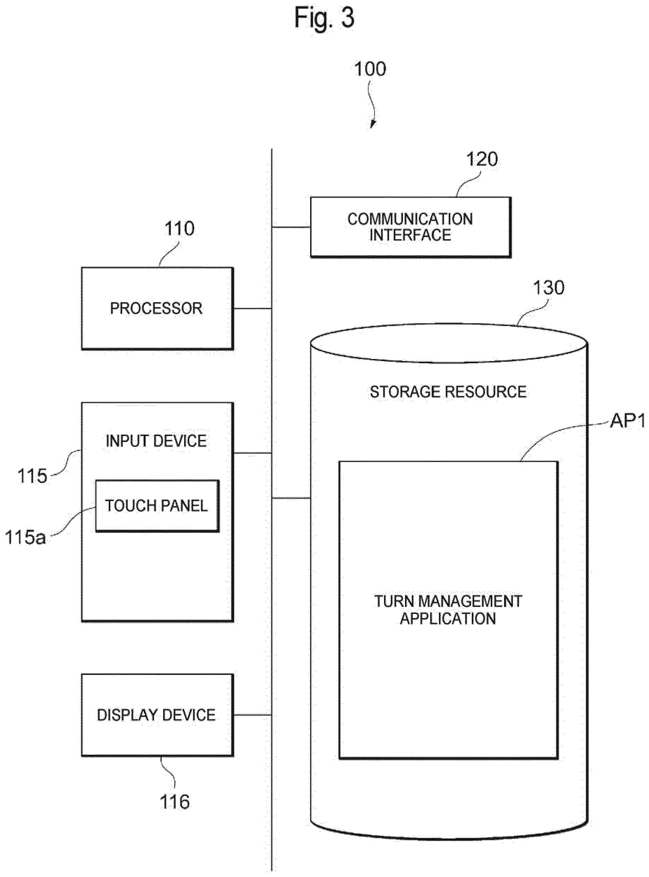

Figure 3 is a block diagram showing a main configuration of the turn management terminal 100. The turn management terminal 100 is provided with a processor 110, an input device 115, a display device 116, a communication interface 120 and a storage resource 130. The turn management terminal 100 accepts an input of acceptance to the turn-waiting list, cancellation and the like by a user directly operating the input device 115 such as a touch panel. Here, as the user, a user to a store, an employee or the like of the store or the like is conceivable. For example, a user makes an input for newly registering turn-waiting with the turn-waiting list, and an employee or the like makes an input for updating the status of information registered with the turn-waiting list. Here, a manager of a store, employees and the like are generically referred to as employees.

The processor 110 is configured with an arithmetic/logical operation unit (such as a CPU) which performs arithmetic operation, logical operation, bit operation and the like and various registers, and centrally controls the portions of the turn management terminal 100 by executing various programs stored in the storage resource 130. The various registers are, for example, a program counter, a data register, an instruction register, a general-purpose register and the like.

The input device 115 is provided with various operation buttons and a touch panel 115a for accepting an input for acceptance to the turn-waiting list, cancellation from the turn-waiting list and the like.

The display device 116 is a device for displaying an acceptance screen which includes the turn-waiting list, an acceptance button and the like, and a standby screen and is configured, for example, with a liquid crystal display.

The communication interface 120 is a hardware module for connecting to the communication network N to communicate with other terminals on the communication network N. The communication interface 120 is a modulation/demodulation device, for example, an ISDN modem, an ADSL modem, a cable modem, an optical modem, a software modem or the like.

The storage resource 130 is, for example, a logic device provided by a storage area of a physical device. The physical device is, for example, a computer-readable recording medium such as a disk drive and a semiconductor memory (a ROM, a RAM or the like). The storage resource 130 may be constructed by mapping a plurality of physical devices onto one logical device or may be constructed by mapping one physical device onto a plurality of logical devices.

The storage resource 130 stores an operating system program, driver programs, various data and the like. The driver programs include, for example, a communication interface driver program for controlling the communication interface 120 and the like. Further, the storage resource 130 stores a computer program (a turn management application) AP1 for managing turn-waiting in cooperation with the management server 300 by being executed by the processor 110 in addition to the various programs and the various data.

<Advertisement providing server 400>

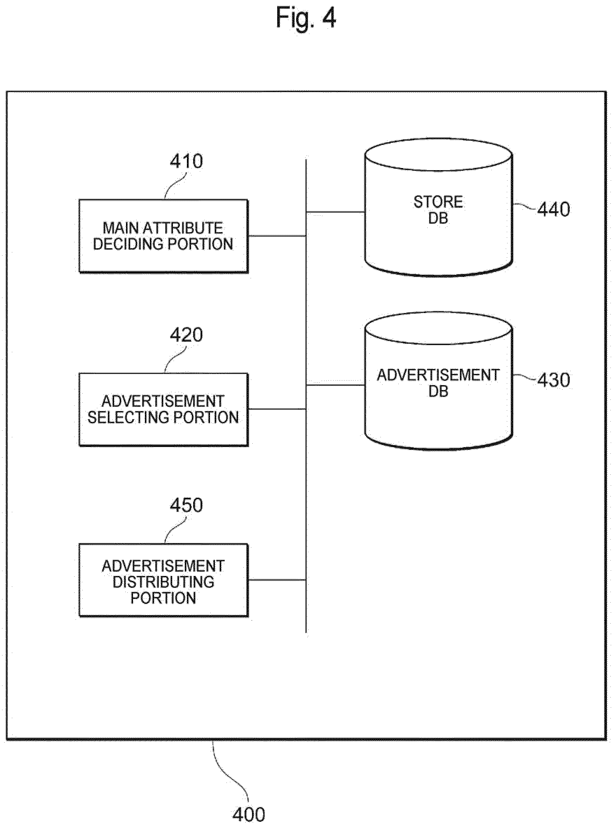

Figure 4 is a block diagram showing a functional configuration of the advertisement providing server 400. The advertisement providing server 400 is provided with a main attribute deciding portion 410, an advertisement selecting portion 420, an advertisement DB 430, a store DB 440, an advertisement distributing portion 450 and the like.

The main attribute deciding portion 410 decides a main attribute of users waiting for their turns in a store to which advertisements are to be provided, in response to a request to provide advertisements from the management server 300 (hereinafter referred to as an advertisement request). More particularly, the advertisement request from the management server 300 includes, in addition to store identification information about a store to which advertisements are to be provided, new registration information and status information about users waiting for their turns in the store (here, Bank A). The main attribute deciding portion 410 decides the main attribute by collecting and analyzing the new registration information and the status information about all the users waiting for their turns in Bank A. Though an attribute of a combination of sex and age group to which the largest number of users belong, such as "women in their thirties" and "men in their fifties", is assumed as the "main attribute" in the present embodiment, the present invention is not intended to be limited thereto. The main attribute may be decided using any one of sex and age group (for example, "women", "twenties" or the like"), or, furthermore, using other parameters (such as residing areas and tastes) instead of (or in addition) to the parameters, sex and age group. The main attribute deciding portion 410 notifies the advertisement selecting portion 420 of the decided main attribute.

The advertisement selecting portion 420 selects advertisements suitable for the users (including user groups) in accordance with an advertisement selecting algorithm set in advance, in consideration of the main attributed notified from the main attribute deciding portion 410. For example, if the main attribute is "women in their thirties", advertisements of genres in which women in their thirties are most likely to be interested in (for example, goods related to beauty, health and the like) are selected. If there are a plurality of advertisements belonging to the same genre, one or more may be randomly selected, or one or more may be sequentially selected in descending order of attention degree (popularity) (see Figure 2).

An identification ID, an advertisement name, advertisement content (advertisement information) and the like for identifying each advertisement are registered with the advertisement database DB 430.

An identification ID of each store where waiting of users is accepted, position information (latitude, longitude and the like), a name of the store, contact information about the store (an address, telephone number, mail address and the like), status information indicating a real-time waiting state and the like are registered with the store DB 440 in association with the store.

The advertisement distributing portion 450 transmits one or more advertisements selected by the advertisement selecting portion 420 to the turn management terminal 100 of a corresponding store as advertisement information. As described before, the advertisement providing server 400 stores the contact information about each store. Therefore, the advertisement providing server 400 can certainly transmit the advertisement information to the turn management terminal 100 by using the contact information about the store.

The advertisement information transmitted to the turn management terminal 100 is displayed on the large size display 250 together with the status information indicating a waiting state at the current point of time. Since the advertisements displayed on the large size display 250 are advertisements selected in consideration of the main attribute (for example, "women in their thirties"), that is, advertisements of genres in which many users waiting for their turns are likely to be interested (for example, goods related to beauty, health and the like) as described above, the users can effectively utilize waiting time by watching the advertisements displayed on the large size display 250. Next, an operation of the advertisement providing system 1000 in the present embodiment will be described.

### <Process for new registration of turn-waiting>

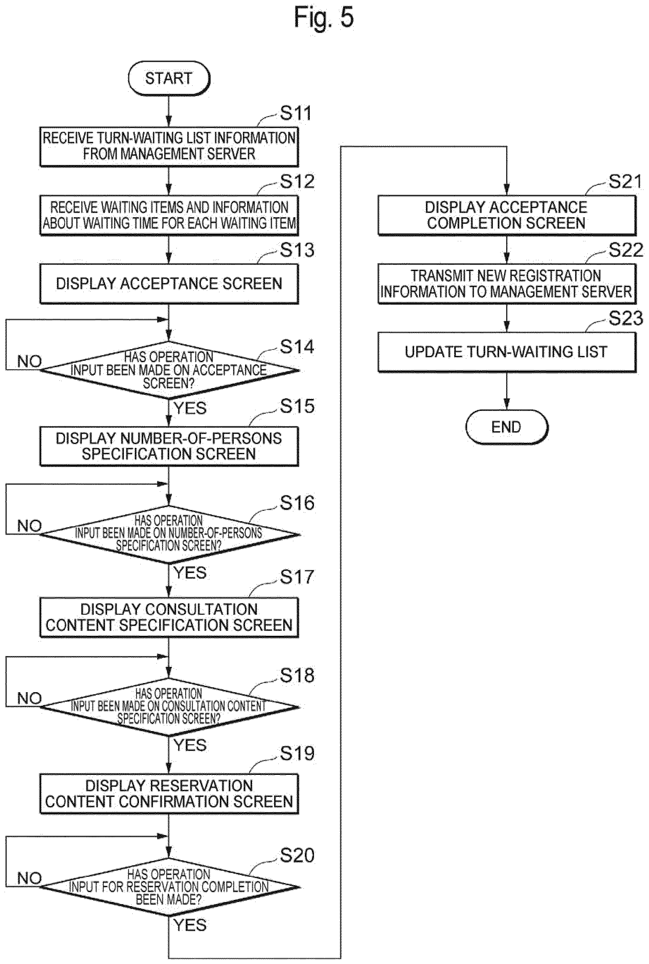

Figure 5 is a flowchart showing a process for new registration of turn-waiting.

First, in order to order a popular menu item, a user visiting a store (in Figure 1, Bank A or the like) operates the turn management terminal (an input portion) 100 placed in the store so that acceptance for newly registering turn-waiting with the turn-waiting list is performed. Specifically, the user appropriately operates the touch panel 115a following a message displayed on the display device 116 to input, in addition to attribute information such as the sex and age (or age group) of the reserving person, the number of persons for reservation, a desired waiting item (for example, various kinds of loans) and the like. What are to be items which can be inputted at the time of acceptance can be decided according to intention of a manager or the like of each store.

Instead of the user directly operating the touch panel 115a, an employee or the like may make an input to accept turn-waiting. At this time, the employee or the like may operate the turn management terminal 100 placed in the vicinity of the entrance of the store or may operate the turn management terminal 100 the employee or the like individually uses.

After that, the turn management terminal 100 receives information included in the turn-waiting list registered with the status management table TA2 from the management server 300 via the communication interface 120 (step S11). Furthermore, the turn management terminal 100 receives waiting items registered with the waiting item management table TA3 and information about current waiting time for each waiting item, from the management server 300 (step S12). As for the current waiting time (estimated waiting time) for each waiting item, the management server 300 calculates the time based on reference waiting time for each waiting item registered with the waiting item management table TA3. For example, in the case of the turn management terminal 100 used in "Bank A", if "Various kinds of loans" are reserved by two groups, estimated waiting time of "Various kinds of loans" is 15 (waiting time for the first group)+10 (waiting time for the second group)+10 (waiting time for the third group)=35 minutes.

Next, the turn management terminal 100 causes an acceptance screen for accepting turn-waiting to be displayed on the display device 116 (step S13). At least a part of the turn-waiting list registered with the status management table TA2 of the management server 300, for example, a list of lines arranged in chronological order of acceptance is displayed on the acceptance screen, each of the lines including an acceptance number of a turn-waiting person, and if necessary, the number of members of the person, consultation content (a waiting item) and the like. Further, a total number of groups that are currently waiting for their turn (a total number of groups waiting for all seat types), estimated waiting time, acceptance time (not shown), a message prompting an operation of acceptance to the turn-waiting list, an acceptance button and the like are also displayed on the display device 116.

Though the estimated waiting time may be calculated in the processor 320 of the management server and transmitted to the turn management terminal 100, it may be directly calculated in the turn management terminal 100. In this case, the turn management terminal 100 can acquire the reference waiting time of each waiting item and the current number of turn-waiting groups for each waiting item from the management server 300 and calculate the estimated waiting time. However, in description below, the "shortest waiting time", "longest waiting time" and "total waiting time" will be generically referred to as "estimated waiting time" if it is not especially necessary to limit which of them estimated waiting time is to be set.

The turn management terminal 100 detects whether or not an operation input by a user, an employee or the like via the input device 115 such as the touch panel 115a has been made on the displayed acceptance screen (step S14). For example, if an operation to the touch panel 115a is detected, and an input is accepted (step S14: YES), a number-of-persons specification screen for specifying the number of persons for turn-waiting is caused to be displayed on the display device 116 (step S15). A message prompting an operation of inputting the number of persons, a number-of-persons specification button and the like are displayed on the number-of-persons-specification screen.

The turn management terminal 100 detects whether or not an operation input by the user, the employee or the like via the input device 115 has been made on the displayed number-of-persons specification screen (step S16). If an operation to the touch panel 115a is detected, and an input of the number of persons is accepted (step S16: YES), a specification screen for specifying consultation content is caused to be displayed on the display device 116 (step S17).

The turn management terminal 100 detects whether or not an operation input by the user, the employee or the like via the input device 115 has been made on the displayed consultation content (various kinds of loans and the like) specification screen (step S18). If an operation to the touch panel 115a is detected, and an input of specification of consultation content is accepted (step S18: YES), a reservation content confirmation screen is caused to be displayed on the display device 116 (step S19). On the reservation content confirmation screen, the accepted number of persons and consultation content are displayed. A message prompting confirmation of content of the reservation, a message prompting a reservation decision operation, a reservation decision button and the like are displayed.

The turn management terminal 100 detects whether a reservation completion operation has been performed or not (step S20). If the reservation completion operation is accepted (step S20: YES), an acceptance completion screen is caused to be displayed (step S21). On the acceptance completion screen, an acceptance number (a waiting number), estimated waiting time and the like are displayed. Further, on the acceptance completion screen, a message prompting reception of an advertisement suitable for the user is displayed together with a turn ticket. The user can receive the turn ticket printed from the printers 200 connected to the turn management terminal 100. Display of advertisements on the large size display 250 will be described later.

When reservation is established as described above, the turn management terminal 100 generates new registration information including the number of persons, the consultation content, the estimated waiting time and the like based on the reservation content. Then, the turn management terminal 100 transmits the generated new registration information to the management server 300 (step S22).

Receiving new registration information from a certain store (here, Bank A), the management server 300 performs a process of adding one turn-waiting group to the turn-waiting list based on the received new registration information and updates the status management table TA2 (step S23).

Update of the turn-waiting list of each facility occurs not only at the time of accepting new registration but also at the time when any of operations of "cancel", "change", "call" and "guide" has been performed by an employee or the like for registered turn-waiting. The "cancel" means to cancel turn-waiting, and "change" means to change details of turn-waiting (such as the number of persons for reservation) that have been inputted once. Further, "call" means a state of having verbally called a reserving person and informed that the person's reservation has come or a state of having informed the reserving person to that effect by telephone or mail, and "guide" means to, at the time of having guided a person whose turn has come, delete a turn-waiting line for the person.

For example, when having guided a turn-waiting person or the person's group, an employee or the like performs the "guide" operation. When the "guide" operation has been performed, a corresponding person in the first position in order is deleted from the turn-waiting list, and the next person is displayed on the turn management terminal 100 as being in the first position in order in the turn-waiting list. In a case where the "cancel", "change" or "call" operation is performed, a process corresponding to each update operation is performed similarly.

### <Advertisement providing process>

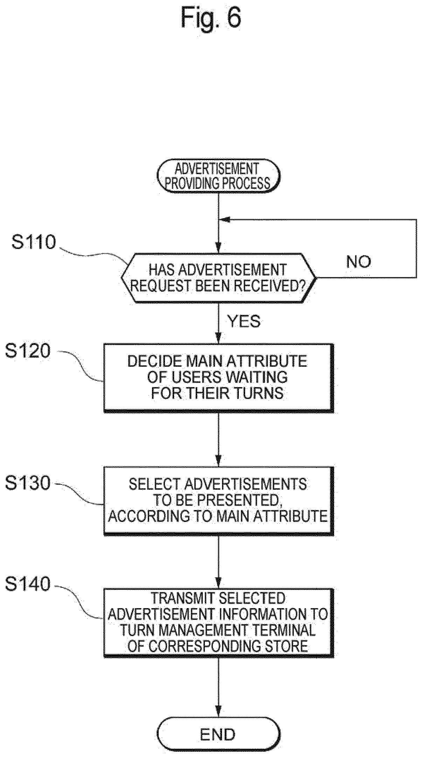

Figure 6 is a flowchart showing an advertisement providing process executed by the advertisement providing server 400.

The main attribute deciding portion 410 of the advertisement providing server 400 detects whether an advertisement request has been received from the management server 300 or not (step S110). When detecting reception of the advertisement request (step S110: YES), the main attribute deciding portion (a decision portion) 410 decides an attribute of all of users waiting for their turns (that is, a main attribute) by aggregating new registration information (attribute information) and status information (attribute information) about the users waiting for their turns included in the advertisement request and performing analysis and the like about the information (S120). The main attribute deciding portion 410 notifies the advertisement selecting portion 420 of the decided main attribute. The advertisement request may be transmitted by the management server 300 as new registration of users as a trigger or may be transmitted in a constant cycle (every T1 hours). At which timing the advertisement request is to be transmitted can be appropriately set or changed according to system design and the like.

The advertisement selecting portion (a selection portion) 420 selects one or more advertisements suitable for the users (including user groups) in consideration of the notified main attribute (step S130) and sends the advertisements to the advertisement distributing portion 450. The advertisements to be selected are stored in the advertisement database DB 430.

The advertisement distributing portion (a distribution portion) 450 transmits the one or more advertisements selected by the advertisement selecting portion 420 to the turn management terminal 100 of a corresponding store as advertisement information (step S140) and ends the process. As described before, the store DB 440 of the advertisement providing server 400 stores the contact information about each store. Therefore, the advertisement providing server 400 can certainly transmit the advertisement information to the turn management terminal 100 using the contact information about the store.

When receiving the advertisement information from the advertisement providing server 400, the turn management terminal (a display controlling portion) 100 transfers the advertisement information to the large size display 250. Thereby, the advertisements selected in consideration of the main attribute of the users waiting for their turns are displayed on the large size display 250. For example, if the main attribute is "women in their thirties", advertisements of such genres that attract interests of "women in their thirties" (for example, goods related to beauty, health and the like) are displayed on the large size display 250. As a result, it becomes possible for the users to effectively utilize waiting time, by watching the advertisements displayed on the large size display 250. The turn management terminal (the display controlling portion) 100 displays not only the advertisement information but also status information indicating a waiting state at the current point of time together on the large size display 250 (see Figure 2).

### B. Second embodiment

Though description has been made on the case where one turn management terminal 100 is used in one store in the first embodiment described above, description will be made on a case where a plurality of turn management terminals 100 are used in one store in a second embodiment.

The case of using a plurality of turn management terminals 100 in one store is different from the case of using only one turn management terminal 100 in a point that data is shared among the turn management terminals 100.

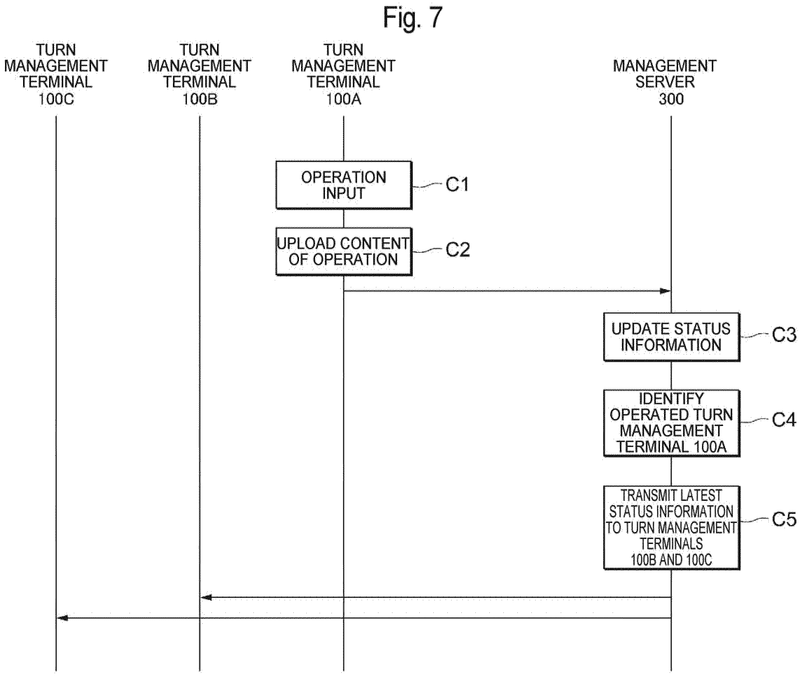

Figure 7 is a sequence diagram in a case where turn management is performed using three turn management terminals 100A to 100C. For example, when a particular turn management terminal 100 (the turn management terminal 100A shown in Figure 7) is operated in Bank A (C1), content of the operation (here, status update information is assumed) is uploaded to the management server 300 (C2). The management server 300 updates status information about Bank A registered with the status management table TA2 based on the received status update information (C3). Then, the management server 300 refers to the client management table TA1 to identify the turn management terminals 100 used in Bank A (C4). Here, since the three turn management terminals 100A to C are registered with the client management table TA1 for Bank A, the management server 300 transmits the updated latest status information to the terminals other than the turn management terminal 100A, that is, the turn management terminals 100B and 100C (C5) and ends the process.

As a result, the latest information is always synchronously reflected on each turn management terminal 100. Thereby, it becomes possible to, even in the case of using a plurality of turn management terminals 100 in one store, perform optimal turn-waiting management without occurrence of a trouble that updated information about turn-waiting is not reflected on a part of the turn management terminals 100, and the like.

### C. Others

The present invention is not limited to the embodiments described above and can be implemented in other various forms within a range not departing from the spirit of the present invention. Therefore, the above embodiments are mere examples and should not be interpreted as being limitative. For example, the process steps described above can be executed in arbitrarily changed order or in parallel within a range where inconsistency does not occur in process content.

Though an example in which the function of deciding a main attribute of users (the main attribute deciding portion 410) is provided in the advertisement providing server 400 is illustrated in the embodiment described above, this is not intended to be limitative. The function of deciding a main attribute of users may be provided in the management server 300. More particularly, the management server (a detection portion) 300 sequentially detects whether the main attribute of users has been changed or not for each store and, if a change is recognized in the main attribute (for example, "women in their thirties"→"teenager men"), sends an advertisement request including the changed main attribute to the advertisement providing server 400. The advertisement providing server (the distribution portion) 400 selects advertisements corresponding to the changed main attribute in response to the advertisement request from the management server 300 and provides the advertisements to the users. According to such a configuration, it is possible to immediately switch advertisements to be displayed on the large size display 250 according to a change in the main attribute of users, and it becomes possible to provide information useful to the users.

A ratio of display areas of the waiting status information Ie indicating a waiting state and the advertisement information Ia which are displayed on the large size display 250 may be switched according to the number of waiting groups (see Figure 2). For example, if the number of waiting groups is small, the display area of the waiting status information Ie is decreased, while the display area of the advertisement information Ia is set large. Further, display of the waiting status information Ie and display of the advertisement information Ia may be switched at a timing corresponding to the number of waiting groups. For example, as a cycle of switching display between the waiting status information Ie and the advertisement information Ia, S1 seconds may be set if the number of waiting groups is equal to or smaller than N1, and S2 seconds (>S1 seconds) may be set if the number of waiting groups exceeds N1. Furthermore, if the number of waiting groups is "0", advertisements may be displayed on the whole screen of the large size display 250. As the advertisements displayed in this case, advertisements decided in advance (for example, advertisements of the store where the large size display 250 is installed) may be selected, or the advertisement providing server 400 may randomly select the advertisements to be displayed. Furthermore, advertisements may be sequentially displayed in descending order of frequency of having been displayed, based on a display history of advertisements so far.

Further, conditions may be specified for types of advertisements issued by the advertisement providing server 400 by each store. For example, in a case where there are a plurality of advertisements to be issued, a condition of preventing facilities of the same business category (for example, coffeehouses) to overlap as advertisement-covered facilities and the like may be set. Further, the above configuration is applicable not only for categories but also for areas of advertisement-covered facilities or the like similarly. For example, a setting may be made so that advertisement-covered facilities are concentrated in one area. Otherwise, a setting may be made so that advertisement-covered facilities are distributed in various areas. What kind of condition is to be adopted can be set or changed by a manager or the like of each store.

Further, though the advertisement providing server 400 and the management server 300 are separately configured in the above embodiments, for example, a configuration is also possible in which all (or a part) of functions of the management server 300 are mounted on the advertisement providing server 400. Furthermore, a program for realizing each embodiment described above may be stored into a recording medium. By using the recording medium, it is possible to install the program into a computer which is provided with a display device for displaying a waiting state of users waiting their turns in facilities and which is for providing advertisements to the users. Here, the recording medium which stores the program may be a non-transitory recording medium. Though the non-transitory recording medium is not especially limited, for example, a recording medium such as a CD-ROM is possible.

## Claims

1. An advertisement providing system comprising a display device displaying a waiting state of users waiting for their turns in a facility and providing advertisements to the users, the advertisement providing system comprising:
an advertisement database storing a plurality of pieces of advertisement information;
an input portion accepting an input of pieces of attribute information about the users waiting for their turns;
a decision portion deciding a main attribute of all of the users waiting for their turns by aggregating and analyzing the input pieces of attribute information;
a selection portion selecting advertisement information to be provided, based on the decided main attribute;
a distribution portion distributing the selected advertisement information to the facility; and
a display controlling portion displaying the distributed advertisement information together with the waiting state of the users waiting for their turns on the display device.

2. The advertisement providing system according to claim 1, further comprising a detection portion detecting whether there is a change in the main attribute or not; wherein
if the change in the main attribute is detected by the detection portion, the selection portion selects the advertisement information to be provided, based on the changed main attribute.

3. The advertisement providing system according to claim 1 or 2, wherein the selection portion selects advertisements of genres that the users of the decided main attribute show great interest in, as the advertisement information to be provided.

4. The advertisement providing system according to claim 1 or 2, wherein the main attribute is at least either a sex or an age group to which the largest number of users belong.

5. The advertisement providing system according to claim 1, wherein the display controlling portion comprises a first switching portion switching a ratio of display areas of status information indicating the waiting state of the users and the distributed advertisement information according to the number of waiting user groups.

6. The advertisement providing system according to claim 5, wherein the display controlling portion comprises a second switching portion switching between display of the status information indicating the waiting state of the users and display of the distributed advertisement information at a timing corresponding to the number of waiting user groups instead of the first switching portion.

7. The advertisement providing system according to claim 6, wherein the second switching portion displays the advertisement information on the whole screen of the display device if the number of waiting groups is zero.

8. The advertisement providing system according to claim 7, wherein, at the time of displaying the advertisement information on the whole screen, the second switching portion sequentially switches and displays advertisement information in descending order of frequency of having been displayed, based on a display history of advertisements so far.

9. An advertisement providing method for providing advertisements to users waiting for their turns in a facility, the method comprising:
an input step of accepting an input of pieces of attribute information about the users waiting for their turns;
a decision step of deciding a main attribute of all of the users waiting for their turns by aggregating and analyzing the input pieces of attribute information;
a selection step of selecting advertisement information to be provided, from an advertisement database storing a plurality of pieces of advertisement information, based on the decided main attribute; and
a display controlling step of displaying the selected advertisement information together with the waiting state of the users waiting for their turns on a display device installed in the facility.
